# EUROPÄISCHE PATENTSCHRIFT

(11) **EP 0 569 924 B1**
(45) Veröffentlichungstag und Bekanntmachung des Hinweises auf die Patenterteilung: **06.08.1997**
(21) Anmeldenummer: 93107625.1
(22) Anmeldetag: 11.05.1993
(51) Int. Cl.: G01P 21/02, G01D 18/00, G01B 7/14

(54) **Verfahren und Vorrichtung zur Überwachung eines Sensors**
Method and device for monitoring a sensor
Procédé et dispositif de surveillance d'un capteur

(30) Priorität: 15.05.1992 DE 4216142
(43) Veröffentlichungstag der Anmeldung: 18.11.1993
(73) Patentinhaber: KNORR-BREMSE Systeme für Nutzfahrzeuge GmbH, 80809 München (DE)
(72) Erfinder: Bielig, Peter Michael, W-8000 München 19 (DE)
(74) Vertreter: von Bülow, Tam, Dr.

(56) Entgegenhaltungen:
- EP-A- 0 285 478
- EP-A- 0 288 333
- EP-A- 0 417 423
- DE-A- 3 405 856
- FR-A- 2 590 677
- PATENT ABSTRACTS OF JAPAN vol. 10, no. 149 (P-461)(2206) 30. Mai 1986 & JP-A-61 003 067 ( HITACHI SEISAKUSHO K.K.)

## Beschreibung

Die vorliegende Erfindung bezieht sich auf ein Verfahren und eine Vorrichtung zum Überwachen eines ortsfesten Sensors, der sich in einem bestimmten Abstand zu einem beweglichen Teil befindet, gemäß dem Oberbegriff der unabhängigen Patentansprüche 1 bzw. 12.

Verfahren und Vorrichtung dieser Art sind aus der FR-A-2 590 677 bekannt. Diese Druckschrift beschreibt eine Überwachungsschaltung, die zur Meßschaltung des Sensors und zum Sensor parallel geschaltet ist. Mit Hilfe dieser Überwachungsschaltung können Kurzschlüsse am Sensor und Leitungsunterbrechungen erfaßt und entsprechende Fehlersignale generiert werden.

Der Sensorspannung wird dabei eine Gleichspannung überlagert, die bei Kurzschluß zusammenbricht. Dieses Zusammenbrechen wird mit Komparatoren erfaßt, die durch eine entsprechende Ausgangsspannung den Fehler signalisieren. Damit die durch die Bewegung des Teils im Sensor erzeugte Wechselspannung den Komparator nicht ebenfalls durchschaltet, sind vor den Komparatoren noch Tiefpaßfilter vorgesehen, die den Wechselspannungsanteil ausfiltern.

Wegen der starken Dämpfung des Sensorsignals muß diese Schaltung immer als Zusatzschaltung parallel zur Auswerteschaltung für das Sensorsignal ausgeführt werden. Außerdem lassen sich mit dieser Schaltung nur Kurzschlüsse und Leitungsunterbrechungen erfassen. Weitere Fehlerquellen, wie beispielsweise ein zu großer Abstand zwischen Sensor und dem sich bewegenden Teil, sind mit einer derartigen Schaltung nicht erfaßbar.

Die EP-0 417 423 A2 zeigt eine Schaltung zur Ermittlung der Drehzahl eines Rades, bei der das Ausgangssignal des Sensors einem Komparator zugeführt wird, dessen einer Eingang mittels eines Spannungsteilers auf einem vorgegebenen elektrischen Potential liegt und dessen anderer Eingang mit dem Sensor verbunden ist, wodurch dem Sensorausgangssignal eine Gleichspannungskomponente überlagert wird. Um Fehler, wzb. eine Leitungsunterbrechung, einen Kurzschluß oder Fehlerwiderstände erkennen zu können, ist eine Hilfseinrichtung vorgesehen, die geschwindigkeitsabhängig den Innenwiderstand der Auswerte-Elektronik verändert. Diese Hilfseinrichtung vermindert bei höheren Frequenzen oder Amplituden des Sensorausgangssignales die Empfindlichkeit der Auswerte-Elektronik.

In Fahrzeugen, sei es ein Kraftfahrzeug auf der Straße oder ein Schienenfahrzeug, ist es heutzutage üblich, Drehzahl informationen mit einem Sensor von einem sich drehenden oder bewegten Teil aufzunehmen oder abzutasten. Dabei ist der Sensors meist in geringem konstanten Abstand zum Informationsgeber angebracht. Die Konstanz des Abstandes wird jedoch in den meisten Fällen durch Vibrationen u.a. Einflüsse am Fahrzeug empfindlich gestört, so daß die Aufnahme eines einwandfreien Signals nicht stets gewährleistet ist.

Bei einem induktiven Drehzahlsensor, z.B., zum Erfassen der Radgeschwindigkeiten in einem Antiblockiersystem, hängt die Zuverlässigkeit der Drehzahl information wesentlich vom Abstand (Luftspalt) des Sensors von dem die induzierte Spannung erzeugenden rotierenden Polrad ab.

Der Sensorabstand stellt daher in sicherheitsrelevanten Systemen, wie ABS, eine kritische Größe dar, deren Überwachung auf unzuläßig hohe Werte notwendig ist.

Eine derartige Schaltungsanordnung ist aus der Druckschrift GB 2 240 848 A bekannt, die ein System beschreibt, das zur Aufnahme von Fehlern bei Geschwindigkeits-Sensoren dient, die nach der Induktionsmethode arbeiten und zwischen Sensor und einer rotierenden Zahnscheibe einen gewissen Luftspalt aufweisen.

Die Größe des Luftspaltes ist bei solchen Messungen entscheidend für die Genaugkeit der Messung insgesamt, wie bereits weiter oben erwähnt wurde.

Im Stand der Technik sind weiterhin Verfahren bekannt, die die Schwierigkeiten bei einer Luftspaltänderung während des Betriebes softwaremäßig zu lösen versuchen. Diese Verfahren sind jedoch nicht sehr zuverläßig. Sie haben vor allen Dingen den entscheidenden Nachteil, daß sie einen zu großen Luftspalt erst erkennen, wenn die Drehzahlinformation aufgrund des zu großen Abstandes aussetzt.

Die Lösungsansätze, die hardwareseitig unternommen wurden, haben den Nachteil, daß sie technisch zu aufwendig und daher verhältnismäßig störanfällig sind. Ferner sind bei derartigem hardwareseitigen technischen Aufwand die Herstellungskosten so groß, daß sie ökonomisch nicht zu vertreten sind.

Daher ist es Aufgabe der vorliegenden Erfindung, ein Verfahren und eine Vorrichtung bereitzustellen, die mit geringem technischen Aufwand eine betriebssichere Überwachung eines Sensors zur Erfassung von Drehzahlinformationen gewährleistet und kostengünstig in der Herstellung ist.

Diese Aufgabe wird mit den Merkmalen der unabhängigen Hauptansprüche gelöst.

Gemäß dem Oberbegriff des Patentanspruches 1 ist hierzu ein ortsfester Sensor, der sich in einem bestimmten Abstand (S) zu einem beweglichen Teil befindet und ein periodisches Signal abgibt, das der Bewegung des beweglichen Teils und dem Abstand proportional ist, vorgesehen, wobei der vom Sensor erzeugten Wechselspannung eine Gleichspannung überlagert wird. Die Erfindung zeichnet sich gemäß dem Kennzeichenteil des Anspruches 1 dadurch aus, daß aus der zeitlichen Distanz zwischen den Schnittpunkten in der ansteigenden und abfallen Flanke der Wechselspannung und der Gleichspannung der Abstand bei bekannter Frequenz gemessen wird.

Dieses Verfahren kann mit einer Vorrichtung bzw. einer Schaltungsanordnung durchgeführt werden, die gemäß dem Oberbegriff des Anspruches 12 einen sich in bestimmtem Abstand zu einem beweglichen Teil befindlichen Sensor aufweist, der ein periodisches Signal abgibt, das der Bewegung des beweglichen Teils und dem Abstand proportional ist, wobei mittels eines Spannungsteilers der Wechselspannung ein Gleichspannungsanteil überlagert wird und ein Komparator zur Bildung des Ausgangssignales vorgesehen ist, wobei die mit der Gleichspannung überlagerte Wechselspannung am Eingang des Komparators angelegt und dem Komparator eine Auswerteschaltung nachgeschaltet ist. Die Schaltungsanordnung ist gemäß dem Kennzeichenteil des Anspruches 12 dadurch ausgezeichnet, daß die Auswerte-Elektronik aus der zeitlichen Distanz zwischen den Schnittpunkten in den ansteigenden und abfallenden Flanken der Wechselspannung und der Gleichspannung den Abstand bei bekannter Frequenz berechnet.

Die Funktionsweise dieser Schaltung ist wie folgt: Die von einem rotierenden Polrad in einem induktiven Drehzahlgeber induzierte Wechselspannung (U_{E}) wird an den Eingang einer Drehzahlerfassunqsschaltunq gelegt und mittels eines Komparators in ein Rechtecksignal umgewandelt. Dabei wird dieser Wechselspannung der Gleichanteil (U_{G}) überlagert, der sich aufgrund des Spannungsteilers einstellt. Das Eingangssignal, also das Sensor-Signal (U_{E}) gelangt über einen Tiefpaßfilter an den Eingang eines Komparators und muß dort mindestens den überlagerten Gleichanteil überwinden, um ein Schalten des Komparators auszulösen. Da die Amplitude des Eingangssignals bei konstanter Raddrehzahl mit zunehmenden Sensorabstand abnimmt, nimmt auch das sogen. Tastverhältnis des sensorfrequenten Rechtecksignals ab, unter der Voraussetzung, daß die Frequenz konstant bleibt.

Nimmt der Luftspalt nun weiter zu und sinkt die Sensorspannung unter den Gleichspannungsanteil ab, so wird das Tastverhältnis zu Null und das Komparatorsignal verschwindet. Durch Auswertung des Tastverhältnisses mittels einer nachgeschalteten Auswertelektronik kann nun in Verbindung mit der Drehzahl information, z.B. durch Verarbeitung in einem Mikrorechner, auf den vorhandenen Luftspalt geschlossen werden, lange bevor das Drehzahlsignal aussetzt.

Oftmals ist es auch wünschenswert, einen Kurzschluß des Sensoreingangs bzw. einen Windungsschluß des Drehzahlsensors zu erkennen. Auch diese Forderung wird durch die erfindungsgemäße Schaltung gelöst, da bei Stillstand des Polrades die Komparatoreingänge durch die überlagerte Gleichspannung in negativer Richtung vorgespannt werden und somit am Ausgang des Komparators eine logische "Null" anliegt. Wird nun der Sensor kurzgeschlossen, wird die überlagerte Gleichspannung ebenfalls zu Null und der nicht invertierende Eingang des Komparators wird über einen hochohmigen Widerstand über den invertierenden Eingang des Komparators angehoben. Damit erscheint am Ausgang eine logische "Eins", so daß der Kurzschluß hardwaremäßig angezeigt wird.

Besonders vorteilhaft bei dieser erfindungsgemäßen Methode ist es, daß sie nicht nur auf induktive Meßprinzipien beschränkt ist, sondern ebenso optische oder kapazitive Meßprinzipien verwendet werden können. Diese Tatsache ist darauf zurückzuführen, daß der Ausgang des Sensors ein periodisches Signal abgibt, dem eine Gleichspannungskomponente überlagert wird. Die Größe der überlagerten Gleichspannung (U_{G}) ist vorteilhafterweise so wählen, daß auch bei größeren Abständen (S) die Distanz (d) zwischen den Schnittpunkten (A,B) genau gemessen bzw. ausgewertet werden kann.

In vorteilhafter Weise wirkt sich auch aus, daß bei Kurzschluß des Sensors die überlagerte Gleichspannung (U_{G}) zu Null wird und der nichtinvertierende Eingang des Komparators durch einen hochohmigen Widerstand über den invertierenden Eingang des Komparators angehoben wird.

Vorteilhaft wirkt sich erfindungsgemäß auch der Einsatz eines vergleichsweise kostengünstigen Komparators aus, dessen Ausgangssignale Rechtecksignale sind, die in relativ einfacher Weise von einer nachgeschalteten Auswertelektronik, die einen Mikroprozessor beinhaltet, ausgewertet werden können. Mit dem rechteckigen Ausgangssignalen des Komparators kann auch in vorteilhafter Weise und auf einfachem Wege die Frequenz des am Sensor vorbeibewegten Teils und damit die Geschwindigkeit desselben bestimmt werden.

Das erfindungsgemäße Verfahren zeichnet sich eben dadurch aus, daß eine Vergrößerung des Abstandes zwischen dem Sensor und den bewegten Teilen bereits erkannt wird, lange bevor die Drehzahl information abreißt.

Daher werden u.a. die Herstellungskosten vorteilhaft beinflußt, da kein zusätzlicher hardwareseitiger Aufwand erforderlich ist. Insbesondere zeichnet sich die erfindungsgemäße Schaltungsanordnung dadurch aus, daß sie sowohl zur Überwachung des Sensors als auch zur Drehzahlerfassung ohne Erweiterung des technischen Aufwands genutzt werden kann.

Besonders günstig wirkt sich der Umstand auf die vorliegende Erfindung aus, daß bei Stillstand des bewegten Teiles der statische Pegel am Ausgang des Komparators zur Erkennung eines Sensorwindungsschlusses genutzt wird.

Im nun Folgenden wird die vorliegende Erfindung anhand von Zeichnungen näher erläutert. Es zeigt
- Fig.1: eine erfindungsgemäße Schaltungsanordnung zur Erfassung der Frequenz eines Sensor-Signals (U_{E});
- Fig.2a: eine mechanische Anordnung des Sensors (1) und eines bewegten Teiles (2) mit Signalelementen (10);
- Fig.2b: eine mechanische Anordnung des Sensors (1) und eines Rades als bewegtes Teil (2) auf dessen Umfang sich Signalelemente (10) befinden;
- Fig.3a: Spannungs-Zeitdiagramme, die den Zusamnmenhang zwischen primären Sensors-Signal (U_{E}) und sekundären Rechteck-Signal darstellen, für einen kleinen Luftspalt,
- Fig.3b: Spannungs-Zeitdiagramme, wie in Fig.3a, für einen großen Luftspalt.

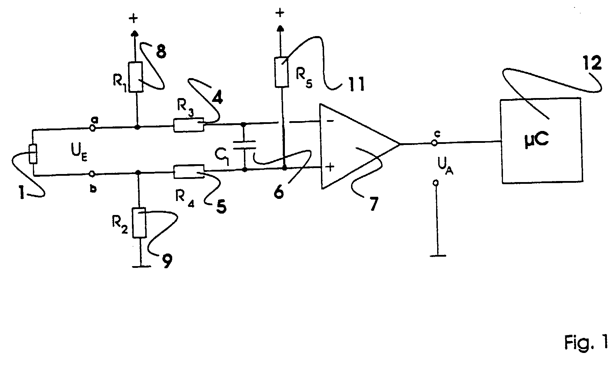

In der Fig.1 wird die erfindungsgemäße prinzipielle Schaltungsanordnung gezeigt. Der allgemeine elektrische Sensor 1 liegt mit seinen beiden Abschlüssen mit dem Sensor-Signal (U_{E}) an den Klemmen a und b, die jeweils mit zwei Widerständen 4,8 und 5,9 entsprechend verbunden sind. Die Widerstände 8 und 9 stellen zusammen mit dem Sensorwiderstand 1 einen Spannungsteiler dar, aufgrund dessen sich der überlagerte Gleichspannungsanteil (U_{G}) bildet, wenn am Widerstand 8 eine entsprechende positive Gleichspannung angelegt wird. Die Widerstände 4 und 5 bilden zusammen mit dem Kondensator 6 ein Tiefpaßfilter, um höherfrequente Störsignale zu bedämpfen. Der mit Klemme b verbundene Widerstand 9 liegt mit seinem anderen Pol an Masse. Der Kondensator 6 ist den beiden Eingansklemmen, d.h., den invertierenden und nichtinvertierenden Klemmen parallel geschaltet. Am nicht invertierenden Eingang des Komparators 7 liegt ein hochohmiger Widerstand 11, der mit seinem anderen Pol an einer geeigneten positiven Gleichspannung liegt. Der hochohmige Widerstand 11 bewirkt ein Anheben des nicht invertierenden Eingangs des Komparators 7 gegenüber dem invertierenden Eingang, wenn beispielsweise der Sensor 1 kurzgeschlossen ist, so daß zwischen den Anschlußklemmen a und b kein Spannungsabfall auftritt. Damit erscheint am Ausgang des Komparators 7 eine logische "Eins". Mit Hilfe dieses statischen Pegels am Ausgang des Komparators 7 läßt sich unabhängig vom Bewegungszustand des im Normalbetrieb bewegten Teiles 2 so mühelos ein Sensorwindungsschluß feststellen, der mit Hilfe der Signalverarbeitungseinrichtung 12 angezeigt wird. Die Signalverarbeitungseinrichtung besteht im Prinzip aus einer gewöhnlichen Zähleinrichtung, zum Beispiel einem Mikrocomputer, der die Signaleingaben programmgemäß verarbeitet. Das Ausgangssignal am Ausgang c des Komparators 7 ist mit (U_{A}) bezeichnet.

Der Gleichanteil (U_{G}) wird zweckmäßigerweise durch die Widerstände 8,9 und den im Normalbetrieb dazugehörigen Innenwiderstand des Sensors 1 so gewählt, daß eine genaue und betriebssichere Erfassung des Tastverhältnisses gewährleistet ist.

Der Sensor 1 ist nicht an eine bestimmte Meßmethode gebunden, sondern kann verschieden physikalische Meßprinzipien zur Anwendung bringen, die beispielsweise eine induktive, kapazitive oder optische Kopplung zwischen Sensor und bewegtem Teil beinhalten.

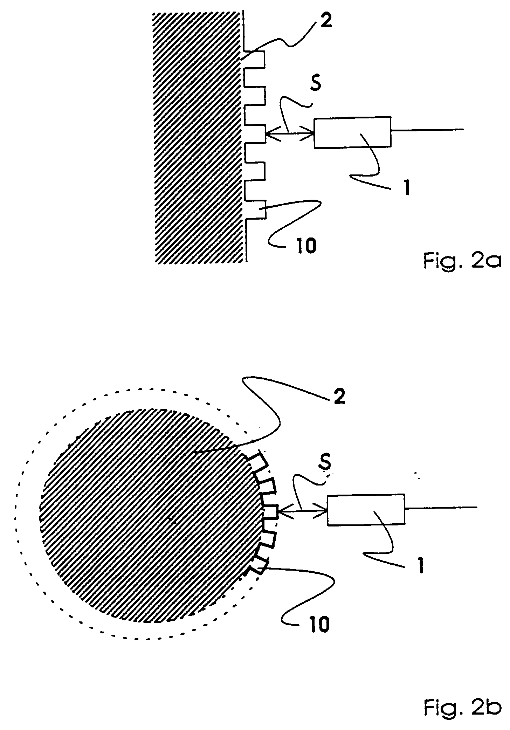

In den Figuren 2a. und 2b. sind zwei Möglichkeiten einer Sensoranordnung in Verbindung mit einem signalerzeugenden, bewegten Teil 2 dargestellt. Das signalerzeugende, bewegte Teil 2 ist im einfachsten Falle ein gerades Band, auf dem gewisse signalerzeugende Elemente 10 angebracht sind. Diese signalerzeugenden Elemente 10 können für den induktiven und kapazitiven Fall mechanische Erhöhungen eines bestimmten Werkstoffes sein und für den Fall einer optischen Meßmethode Schwärzungen auf hellem Hintergrund, die von einer Lichtquelle, die hier nicht dargestellt ist, beleuchtet werden, und deren Reflektion mittels eines geeigneten Sensors aufgenommen werden.

In jedem Falle gibt der Sensor 1 ein elektrisches Signal heraus, dessen Frequenz der Folge der signalgebenden Elemente 10 direkt proportional ist. Dabei ist die Amplitude des Sensorsignals entscheidend von der Geschwindigkeit, mit der das bewegte Teil 2 am Sensor 1 vorbeigeführt wird, abhängig und außerdem abhängig vom Abstand (S) zwischen dem Sensor 1 und dem bewegten Teil 2.

Selbstverständlich kann dieses Prinzip auch für rotierende Wellen oder gezahnte Räder verwendet werden, so daß durch einfaches Zählen der Impulse pro Zeiteinheit auf die Geschwindigkeit eines Fahrzeugs geschlossen werden kann.

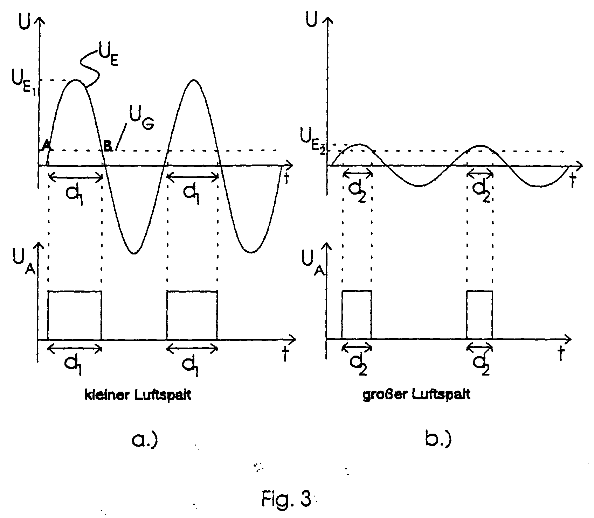

In den Figuren 3a und 3b sind Spannungs-Zeitdiagramme gezeigt, die den Zusammenhang zwischen den Eingangssignalen bzw. den Sensor-Signalen (U_{E}) wiedergeben. In der Fig. 3a ist auf der Abszisse in beiden Darstellungen die Zeit (t) aufgetragen. Auf der Ordinate ist im oberen Falle eine Spannung (U) aufgetragen, während im unteren Diagramm die Spannung (U_{A}) des Ausgangssignals am Komparator 7 aufgetragen ist. Mit U_{E} ist das periodische Signal des Sensors 1 bezeichnet und zeigt im vorliegenden Fall einen sinusförmigen Verlauf. Die Amplitude bzw. die Größe des Sensor-Signals hängt einerseits von der Geschwindigkeit, mit der das bewegte Teil 2 am Sensor 1 vorbei geführt wird und entscheidend auch vom Abstand (S) des Sensors 1 vom bewegten Teil 2 ab. Für den Fall eines kleinen Luftspalts (S) wurde die Amplitude mit U_{E1} bezeichnet. Diesem Wechselsignal (U_{E}) wird eine Gleichspannung (U_{G}) überlagert, die die ansteigende und abfallende Flanke des Wechselsignals (U_{E}) an einer bestimmten Stelle (A,B) schneidet. Die Distanz (d₁), die das Tastverhältnis angibt, ist ein Maß für die Größe des Luftspalts (S) bzw. des Abstandes zwischen dem Sensor 1 und dem bewegten Teil 2. D.h. mit anderen Worten, wenn bei gleichbleibender Frequenz des bewegten Teils 2 der Abstand (S) variiert, variiert auch die Amplitude des Sensor-Signals (U_{E}).

Daraus ergibt sich, daß infolge kleinerwerdenden Neigungswinkels der Flanken des Wechselsignals das Tastverhältnis kleiner wird bzw. die Distanz zwischen den Punkten A und B kleiner wird. Infolgedessen wird auch die Breite der Rechtecksignale am Ausgang des Komparators 7 verändert und zwar umgekehrt proportional zur Größe des Luftspalts (S). D.h., je kleiner der Luftspalt, desto breiter das Rechtecksignal am Ausgang des Komparators 7. Diese Tatsache wird in der Fig. 3 in den beiden graphischen Darstellungen noch einmal Rechnung getragen, da hier ersichtlich, daß die Amplitude (U_{E2}) für einen großen Luftspalt (S) kleiner ist als für den Fall eines großen Luftspalts. Dadurch wird auch aus oben erwähnten Gründen das Tastverhältnis bzw. die Distanz (d₂) kleiner.

### Bezugszeichenliste

1 Sensor
2 bewegtes Teil
3
4 Widerstand
5 Widerstand
6 Kondensator
7 Komparator
8 Widerstand
9 Widerstand
10 signalerzeugendes Element
11 hochohimger Widerstand
12 Auswertelektronik

## Patentansprüche

1. Verfahren zum Überwachen eines ortsfesten Sensors (1), der sich in einem bestimmten Abstand (S) zu einem beweglichen Teil (2) befindet und ein periodisches Signal abgibt, das der Bewegung des beweglichen Teils (2) und dem Abstand (S) proportional ist, wobei der vom Sensor (1) erzeugten Wechselspannung (U_{E}) eine Gleichspannung (U_{G}) überlagert wird,
dadurch gekennzeichnet,
daß aus der zeitlichen Distanz (d) zwischen den Schnittpunkten (A, B) in der ansteigenden und abfallenden Flanke der Wechselspannung (UE) und der Gleichspannung (U_{G}) der Abstand (S) bei bekannter Frequenz gemessen wird.

2. Verfahren nach Anspruch 1, dadurch gekennzeichnet, daß der Sensor (1) nach einer induktiven Methode arbeitet.

3. Verfahren nach Anspruch 1, dadurch gekennzeichnet, daß der Sensor nach einer optischen Methode arbeitet.

4. Verfahren nach Anspruch 1, dadurch gekennzeichnet, daß der Sensor (1) nach einer kapazitiven Methode arbeitet.

5. Verfahren nach mindestens einem der Ansprüche 1 bis 3, dadurch gekennzeichnet,
daß die Größe des Sensorsignales (U_{E}) mindestens die der überlagerten Gleichspannung (U_{G}) ist.

6. Verfahren nach mindestens einem der Ansprüche 1 bis 5, dadurch gekennzeichnet,
daß die mit der Gleichspannung überlagerte Wechselspannung mit einem Komparator (7) in eine Rechteckpulsfolge umgewandelt wird.

7. Verfahren nach Anspruch 6, dadurch gekennzeichnet, daß bei Stillstand des beweglichen Teils der Ausgang des Komparators (7) einen definierten Pegel (logisch "Null") annimmt.

8. Verfahren nach Anspruch 6 oder 7, dadurch gekennzeichnet,
daß bei Kurzschluß des Sensors (1) die überlagerte Gleichspannung zu Null wird und der nichtinvertierende Eingang des Komparators (7) durch einen hochohmigen Widerstand (11) über den invertierenden Eingang des Komparators (7) angehoben wird und der Ausgang des Komparators einen logischen "Eins-Pegel" annimmt.

9. Verfahren nach mindenstens einem der Ansprüche 6 bis 8, dadurch gekennzeichnet,
daß mit den Signalen am Ausgang des Komparators (7) die Frequenz des bewegten Teils bestimmt wird.

10. Verfahren nach mindestens einem der Ansprüche 6 bis 9, dadurch gekennzeichnet,
daß die Signale am Ausgang des Komparators (7) mittels einer nachgeschalteten Auswerte-Elektronik (12), die einen Mikroporzessor beinhaltet, ausgewertet werden.

11. Verfahren nach Anspruch 10, dadurch gekennzeichnet, daß mit Hilfe der Auswerte-Elektronik (12) ein Kurzschluß im Sensor erfaßt wird.

12. Vorrichtung und Schaltungsanordnung zum Überwachen eines ortsfesten Sensors (1) der sich in einem bestimmten Abstand (S) zu einem beweglichen Teil (2) befindet und ein periodisches Signal abgibt, das der Bewegung des beweglichen Teils (2) und dem Abstand (S) proportional ist, bei der mittels eines Spannungsteiler (8,9) der Wechselspannung (U_{E}) ein Gleichspannungsanteil (U_{G}) überlagert wird und ein Komparator (7) zur Bildung eines Ausgangssignals vorgesehen ist, wobei die mit der Gleichspannung (U_{G}) überlagerte Wechselspannung (U_{E}) am Eingang des Komparators (7) angelegt und dem Komparator (7) eine Auswerte-Elektronik (12) nachgeschaltet ist, dadurch gekennzeichnet, daß die Auswerte-Elektronik (12) aus der zeitlichen Distanz zwischen den Schnittpunkten (A,B) in den ansteigenden und abfallenden Flanken der Wechselspannung und der Gleichspannung den Abstand (S) bei bekannter Frequenz berechnet.

13. Vorrichtung nach Anspruch 12, dadurch gekennzeichnet, daß ein Tiefpaßfilter (4, 5, 6) vorgesehen ist, mit dem höherfrequente Störsignale aus der Überlagerung von Wechselspannung (U_{E}) und Gleichspannung (U_{G}) gefiltert werden.

14. Vorrichtung nach Anspruch 12 oder 13, dadurch gekennzeichnet,
daß der Sensor (1) ein induktiver Geber ist.

15. Vorrichtung nach Anspruch 12 oder 13, dadurch gekennzeichnet,
daß der Sensor (1) ein optischer Geber ist.

16. Vorrichtung nach Anspruch 12 oder 13, dadurch gekennzeichnet,
daß der Sensor (1) ein kapazitiver Geber ist.

17. Vorrichtung nach mindestens einem der Ansprüche 12 bis 16, dadurch gekennzeichnet,
daß der bewegliche Teil (2) ein bandähnliches Gebilde ist, auf dem periodisch signalerzeugende Elemente (10) angeordnet sind.

18. Vorrichtung nach mindestens einem der Ansprüche 12 bis 16, dadurch gekennzeichnet,
daß der bewegliche Teil (2) ein Rad ist, auf dem periodisch signalerzeugende Elemente (10) angeordnet sind.

19. Vorrichtung nach Anspruch 17 oder 18, dadurch gekennzeichnet,
daß die signalerzeugenden Elemente (10) Erhöhungen und Vertiefungen sind.

20. Vorrichtung nach Anspruch 17 oder 18, dadurch gekennzeichnet,
daß die signalerzeugenden Elemente (10) unterschiedliche Strichmuster sind.

21. Vorrichtung nach einem der Ansprüche 12 bis 20, dadurch gekennzeichnet,
daß der nichtinvertierende Eingang des Komparators (7) über einen hochohmigen Widerstand (11) an einer Gleichspannung liegt.

22. Vorrichtung nach einem der Ansprüche 12 bis 21, dadurch gekennzeichnet,
daß die Auswerte-Elektronik (12) einen Mikroprozessor aufweist.

## Claims

1. A method for monitoring a fixed sensor (1) which is located at a specific distance (S) from a movable part (2) and emits a periodic signal which is proportional to the movement of the movable part (2) and the distance (S), a direct voltage (U_{G}) being superimposed on the alternating voltage (U_{E}) produced by the sensor (1), characterised in that, from the time interval (d) between the points of intersection (A, B) in the rising and falling slope of the alternating voltage (U_{E}) and the direct voltage (U_{G}), the distance (S) is measured with a known frequency.

2. A method according to claim 1, characterised in that the sensor (1) operates according to an inductive method.

3. A method according to claim 1, characterised in that the sensor operates according to an optical method.

4. A method according to claim 1, characterised in that the sensor (1) operates according to a capacitive method.

5. A method according to at least one of claims 1 to 3, characterised in that the magnitude of the sensor signal (U_{E}) is at least that of the superimposed direct voltage (U_{G}).

6. A method according to at least one of claims 1 to 5, characterised in that the alternating voltage superimposed with the direct voltage is converted into a rectangular pulse train by a comparator (7).

7. A method according to claim 6, characterised in that when the movable part is stationary, the output of the comparator (7) assumes a defined level (logical "zero").

8. A method according to claim 6 or 7, characterised in that in the event of a short circuit of the sensor (1), the superimposed direct voltage becomes zero and the non-inverting input of the comparator (7) is raised by a high-valued resistor (11) above the inverting input of the comparator (7) and the output of the comparator assumes a logical "one" level.

9. A method according to at least one of claims 6 to 8, characterised in that with the signals at the output of the comparator (7), the frequency of the moving part is ascertained.

10. A method according to at least one of claims 6 to 9, characterised in that the signals at the output of the comparator (7) are evaluated by means of an electronic evaluating unit (12) which is connected downstream thereof and includes a microprocessor.

11. A method according to claim 10, characterised in that a short circuit in the sensor is detected with the aid of the electronic evaluating unit (12).

12. A device and circuit arrangement for monitoring a fixed sensor (1) which is located at a specific distance (S) from a movable part (2) and delivers a periodic signal which is proportional to the movement of the movable part (2) and the distance (S), in which a direct voltage component (U_{G}) is superimposed on the alternating voltage (U_{E}) by means of a voltage divider (8,9) and a comparator (7) is provided to form an output signal, the alternating voltage (U_{E}) with the superimposed direct voltage (U_{G}) being applied to the input of the comparator (7) and an electronic evaluating unit (12) being connected downstream of the comparator (7), characterised in that, from the time interval between the points of intersection (A,B) between the rising and falling slopes of the alternating voltage and the direct voltage, the electronic evaluating unit (12) calculates the distance (S) with a known frequency.

13. A device according to claim 12, characterised in that a low pass filter (4, 5, 6) is provided, with which higher frequency interference signals are filtered out of the superimposition of the alternating voltage (U_{E}) and the direct voltage (U_{G}).

14. A device according to claim 12 or 13, characterised in that the sensor (1) is an inductive transducer.

15. A device according to claim 12 or 13, characterised in that the sensor (1) is an optical transducer.

16. A device according to claim 12 or 13, characterised in that the sensor (1) is a capacitive transducer.

17. A device according to at least one of claims 12 to 16, characterised in that the movable part (2) is a strip-like structure on which periodic signal-generating elements (10) are arranged.

18. A device according to at least one of claims 12 to 16, characterised in that the movable part (2) is a wheel on which periodic signal-generating elements (10) are arranged.

19. A device according claim 17 or 18, characterised in that the signal-generating elements (10) are elevations and indentations.

20. A device according to claim 17 or 18, characterised in that the signal-generating elements (10) are varying line patterns.

21. A device according to one of claims 12 to 20, characterised in that a direct voltage is applied to the non-inverting input of the comparator (7) via a high-valued resistor (11).

22. A device according to one of claims 12 to 21, characterised in that the electronic evaluating unit (12) has a microprocessor.

## Revendications

1. Procédé de surveillance d'un capteur fixe (1) qui se trouve à une distance donnée (S) par rapport à une pièce mobile (2) et qui émet un signal périodique proportionnel au mouvement de la pièce mobile (2) et à la distance (S), une tension continue (U_{G}) se superposant à la tension alternative (U_{E}) générée par le capteur (1), caractérisé en ce que
à partir de l'intervalle de temps (d) entre les points d'intersection (A, B) sur les flancs montant et descendant de la tension alternative (U_{E}) et de la tension continue (U_{G}), on mesure la distance (S) à une fréquence connue.

2. Procédé selon la revendication 1, caractérisé en ce que le capteur (1) fonctionne selon une méthode inductive.

3. Procédé selon la revendication 1, caractérisé en ce que le capteur fonctionne selon une méthode optique.

4. Procédé selon la revendication 1, caractérisé en ce que le capteur (1) fonctionne selon une méthode capacitive.

5. Procédé selon au moins une des revendications 1 à 3, caractérisé en ce que
la grandeur du signal du capteur (U_{E}) est au moins égale à celle de la tension continue (U_{G}) superposée.

6. Procédé selon au moins une des revendications 1 à 5, caractérisé en ce que
la tension alternative, à laquelle se superpose la tension continue, est transformée au moyen d'un comparateur (7) en une suite d'impulsions carrées.

7. Procédé selon la revendication 6, caractérisé en ce que, à l'arrêt de la pièce mobile, la sortie du comparateur (7) adopte un niveau défini («zéro » logique).

8. Procédé selon la revendication 6 ou 7, caractérisé en ce qu'en cas de court-circuit du capteur (1), la tension continue superposée devient zéro et l'entrée non inverseuse du comparateur (7) est élevée par une résistance (11) de haute valeur ohmique au-dessus de l'entrée inverseuse du comparateur (7) et que la sortie du comparateur adopte un « niveau un » logique.

9. Procédé selon au moins une des revendications 6 à 8, caractérisé en ce que
on détermine, à l'aide des signaux à la sortie du comparateur (7), la fréquence de la pièce mobile.

10. Procédé selon au moins une des revendications 6 à 9, caractérisé en ce que
les signaux à la sortie du comparateur (7) sont analysés à l'aide d'une électronique d'analyse (12) en aval comprenant un microprocesseur.

11. Procédé selon la revendication 10, caractérisé en ce qu'on enregistre, à l'aide de l'électronique d'analyse (12), un court-circuit dans le capteur.

12. Dispositif et structure de circuit pour la surveillance d'un capteur fixe (1) qui se trouve à une distance donnée (S) par rapport à une pièce mobile (2) et qui émet un signal périodique proportionnel au mouvement de la pièce mobile (2) et à la distance (S), dans lesquels, à l'aide d'un diviseur de tension (8, 9), une part de tension continue (U_{G}) est superposée à la tension alternative (U_{E}) et dans lesquels est prévu un comparateur (7) pour la formation du signal de sortie, la tension alternative (U_{E}), à laquelle se superpose la tension continue (U_{G}), étant appliquée à l'entrée du comparateur (7) et une électronique d'analyse (12) étant intercalée à la suite du comparateur (7), caractérisés en ce que l'électronique d'analyse (12) calcule la distance (S) à une fréquence connue à partir de l'intervalle de temps entre les points d'intersection (A, B) sur les flancs montant et descendant de la tension alternative et de la tension continue.

13. Dispositif selon la revendication 12, caractérisé en ce que
un filtre passe-bas (4, 5, 6) est prévu, permettant de filtrer des signaux parasites à haute fréquence provenant de la superposition de la tension alternative (U_{E}) et de la tension continue (U_{G}).

14. Dispositif selon la revendication 12 ou 13, caractérisé en ce que
le capteur (1) est un capteur à induction.

15. Dispositif selon la revendication 12 ou 13, caractérisé en ce que
le capteur (1) est un capteur optique.

16. Dispositif selon la revendication 12 ou 13, caractérisé en ce que
le capteur (1) est un capteur capacitif.

17. Dispositif selon au moins une des revendications 12 à 16, caractérisé en ce que
la pièce mobile (2) ressemble à une bande sur laquelle sont disposés périodiquement des éléments (10) générateurs de signaux.

18. Dispositif selon au moins une des revendications 12 à 16, caractérisé en ce que
la pièce mobile (2) est une roue sur laquelle sont disposés périodiquement des éléments (10) générateurs de signaux.

19. Dispositif selon la revendication 17 ou 18, caractérisé en ce que
les éléments (10) générateurs de signaux sont des élévations ou des dépressions.

20. Dispositif selon la revendication 17 ou 18, caractérisé en ce que
les éléments (10) générateurs de signaux sont des matrices de trait différentes.

21. Dispositif selon une des revendications 12 à 20, caractérisé en ce que
l'entrée non inverseuse du comparateur (7) est reliée à une tension continue par l'intermédiaire d'une résistance (11) de haute valeur ohmique.

22. Dispositif selon une des revendications 12 à 21, caractérisé en ce que
l'électronique d'analyse (12) comprend un microprocesseur.
